# EUROPEAN PATENT SPECIFICATION

(11) **EP 2 035 175 B1**
(45) Date of publication and mention of the grant of the patent: **05.10.2016**
(21) Application number: 06747960.0
(22) Date of filing: 26.06.2006
(51) Int. Cl.: B23C 5/20, B23B 27/16

(54) **A REPLACEABLE CUTTING INSERT AND A MILLING TOOL**
ERSETZBARER SCHNEIDEINSATZ UND FRÄSWERKZEUG
INSERT DE COUPE REMPLAÇABLE ET OUTIL DE FRAISAGE

(43) Date of publication of application: 18.03.2009
(73) Proprietor: Seco Tools AB, 737 82 Fagersta (SE)
(72) Inventor: EJDERKLINT, Christer, S-737 40 Fagersta (SE); BERTRAND, Riviére, F-18000 Bourges (FR); MEYER, Dominique, F-18500 Berry-Bouy (FR)
(74) Representative: Hägglöf, Henrik
(86) International application number: PCT/SE2006/000777
(87) International publication number: WO 2008/002204

(56) References cited:
- WO-A2-00/76707
- DE-A1- 10 144 734
- US-A- 5 046 899
- US-A- 5 947 650
- US-A- 6 053 672
- US-A1- 2003 002 930
- US-A1- 2003 005 803
- US-A1- 2003 165 363
- US-A1- 2005 117 981

## Description

### BACKGROUND OF THE INVENTION

The present invention relates to a cutting insert according to the preamble of claim 1 and to a milling tool according to claim 8. Such a cutting insert is known from US 2003/165363 A1.

At slot-milling cutters, the periphery of the milling body is equipped with a number of cutting inserts, every second one of which protrudes in relation to one side of the milling body and every second from the opposite side of the milling body. The relative displacement of the cutting inserts is made in order to obtain clearance and in order to obtain slots having perpendicular or parallel bordering surfaces. The bottom surface of the slot is cut by means of the major cutting edges of the cutting inserts while the side surfaces of the slot are cut by means of the minor cutting edges extending substantially perpendicularly to the major cutting edges. Radii between the bottom surface and the side surfaces are obtained by means of more or less rounded cutting corners at a transition between associated pairs of major and minor cutting edges of each cutting insert. The relative displacement requires that the cutting inserts are formed in particular right hand and left hand embodiments in order to guarantee the requisite clearance between the side wall and the portion of the cutting insert following after the minor cutting edge.

Through EP-A-0 873 808 a single sided cutting insert is previously known, which comprises only two, but different, cutting edges, which should not be possible mix-up by the operator. The known cutting insert means poor utilization of the possibilities of the cutting material. In US-A-5,454,671, another single sided cutting insert is shown. A double sided slot milling insert is shown in US-A-5,004,380 having wear reducing lands. US 2003/165363 A1 discloses a cutting insert having two cutting corners; one for right-hand milling and one for lefthand milling. US 2005/117981 A1 and DE 10144734 each shows a cutting insert that has a total of four indexable cutting edges, and that can function as either a right hand or a left hand cutting insert. Two diagonally opposed cutting edges function in right hand cutting, and the other two diagonally opposed cutting edges function in left hand cutting.

### OBJECTS OF THE INVENTION

One object of the present invention is to provide a single sided cutting insert for a wide variety of widths of the slots.

Another object of the present invention is to provide an easy-cutting single sided cutting insert.

Another object of the present invention is to provide a cutting insert, the geometry of which permits that varying corner shapes such as radius, chamfer, wiper or other shapes can be formed thereon.

Another object of the present invention is to provide a milling tool and a cutting insert providing a planar bottom surface in the slot.

Another object of the present invention is to provide a milling tool and a cutting insert directing the chips away from the generated surface of the slot.

### BRIEF DESCRIPTION OF THE DRAWINGS

Preferred embodiments of the present invention are described more closely in the following in connection with the accompanying drawing figures, in which;
FIG. 1A is a perspective view of a part of a milling tool according to the present invention and one embodiment of an insert according to the present invention;
FIG. 1B partially shows the milling insert according to the present invention mounted to the milling tool.
FIG. 1C shows an enlarged portion of the milling insert as shown by the dashed circle in Fig. 1B.
FIG. 2A is a perspective view of the milling insert shown in Fig. 1A.
Fig. 2B is a plan view of the insert according to the invention;
FIG. 2C is a cross-sectional view along the line C-C in Fig. 2B;
FIG. 2D is a front view of the insert shown in Fig.2B;
FIG. 2E shows an enlarged portion of the milling insert as shown by the dashed circle in Fig. 2D.
FIG. 2F shows an enlarged portion of the milling insert as shown by the dashed circle in Fig. 2A.
FIG. 2G shows a rear view of the milling insert.
FIG. 3A is a perspective view of a milling insert according to an alternative embodiment of the present invention.
FIG. 3B shows an enlarged corner portion of the milling insert as shown by the dashed circle in Fig. 3A.
FIG. 3C shows an enlarged corner portion of the milling insert in a front view.
Fig. 4A shows another alternative embodiment of a milling insert according to the invention in a perspective view.
FIG. 4B shows an enlarged corner portion of the milling insert as shown by the dashed circle in Fig. 4A.
FIG. 4C shows an enlarged corner portion of the milling insert in a front view.
FIGS. 5A and 5B show two alternative shoulder milling tools according to the present invention.
FIG. 6 shows another alternative milling tool according to the present invention.

### DETAILED DESCRIPTION OF EMBODIMENTS OF THE INVENTION

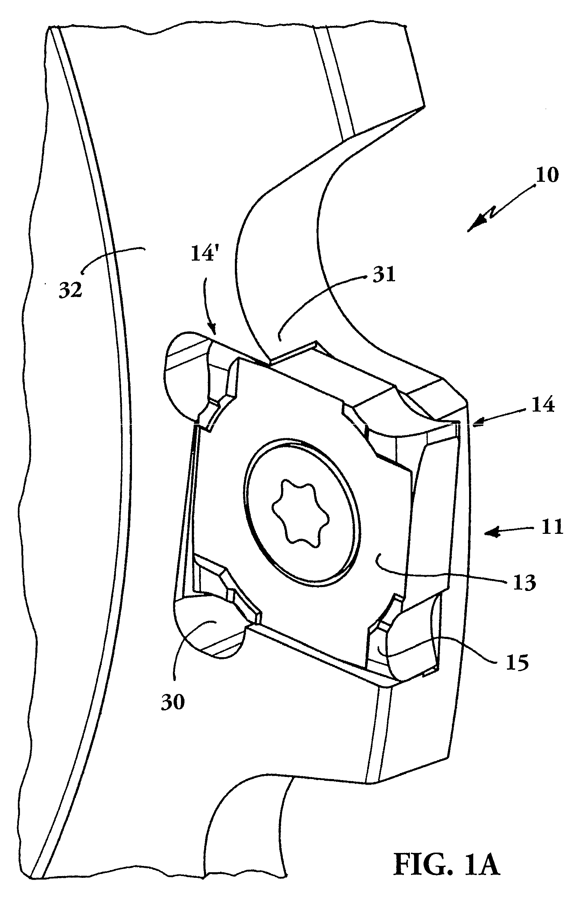

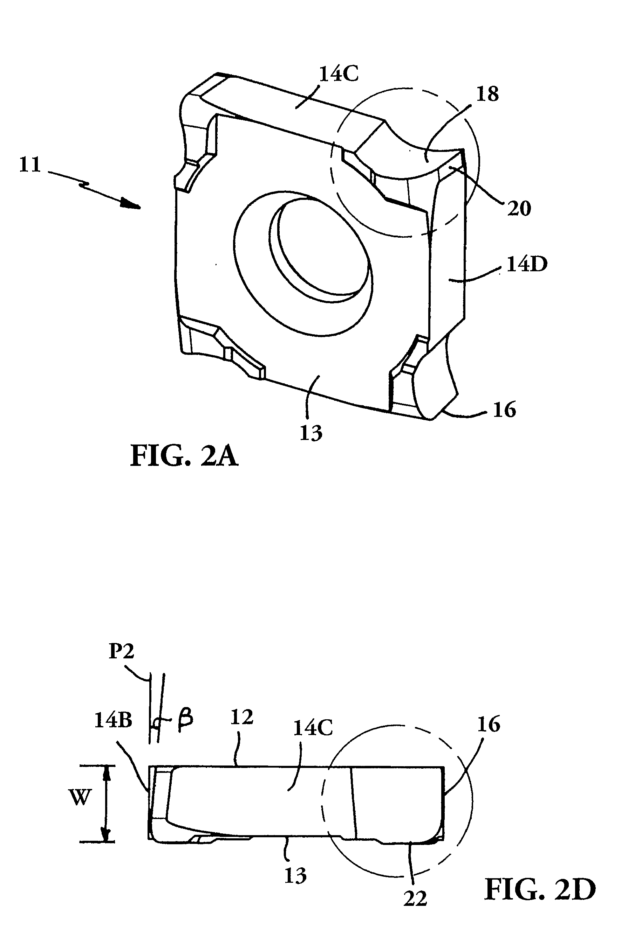

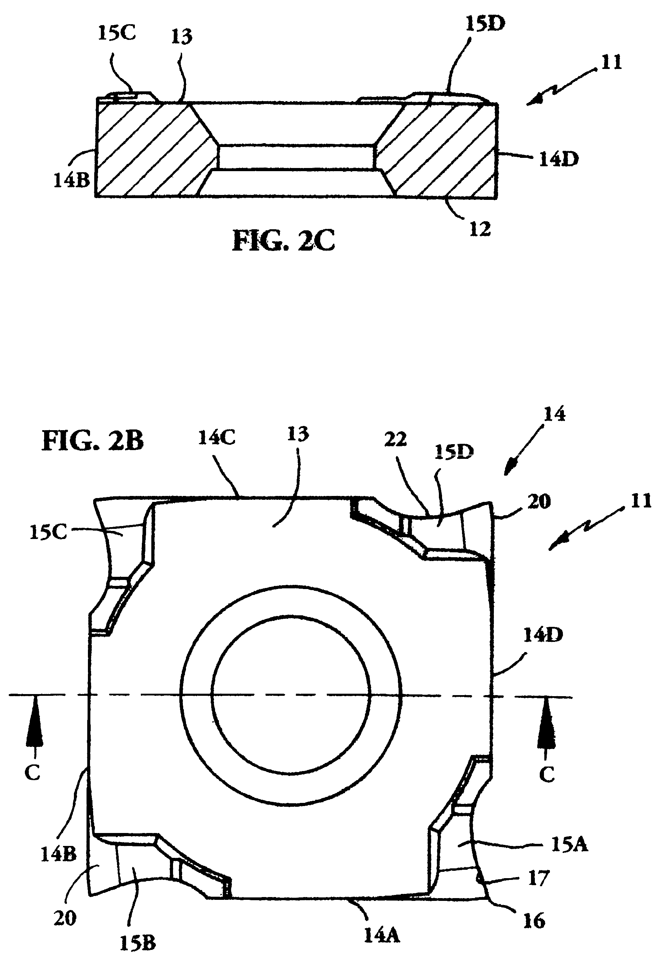

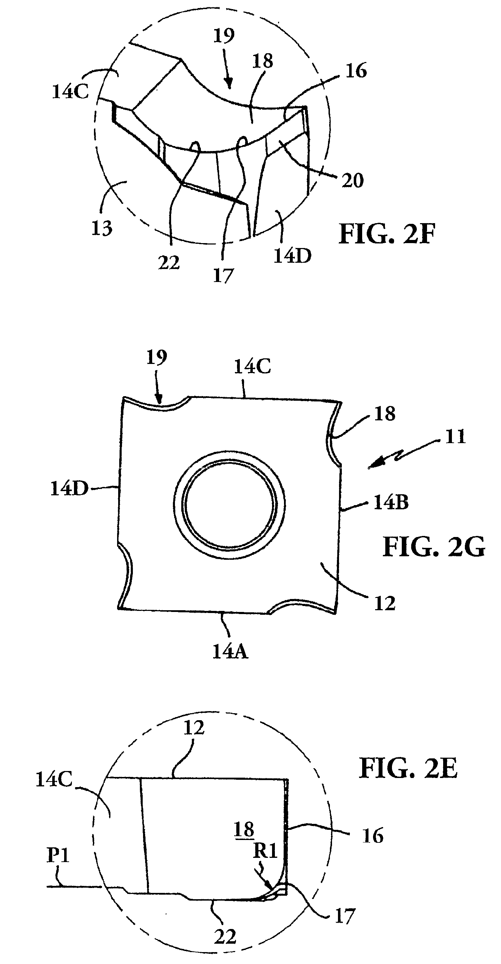

Figs. 1A-1C shows a part of a slot-milling tool 10 according to the present invention and Figs. 2A-2G shows a slot-milling or cutting insert 11 according to the present invention. The replaceable cutting insert 11 is on-edge mounted in a pocket at the periphery of a slot-milling body 32. The cutting insert 11 comprises a polygonal body of wear resistant material. The body includes a first side surface 12 and a second side surface 13 opposing one another and a number of end surfaces 14A-14D extending therebetween. The intersection of two of said end surfaces forms a cutting edge. The cutting corners 14 of the cutting insert 11 are all identical in this embodiment. The insert 11 is provided with a central hole to receive a clamping screw. The hole intersects the first side surface 12 and the second side surface 13. Each cutting corner is provided with a first cutting edge 16 and a second cutting edge 17. The cutting insert 11 may be comprised of a polygonal body of wear-resistant material of a plate of sintered, preferably coated, cemented carbide, in this case a square basic shape in the view according to Fig. 2B. The two side surfaces 12, 13 are substantially parallel and both extend to end surfaces 14A-14D. The first side surface 12 is substantially planar while the second side surface 13 connects to raised portions 15A-15D at corner portions 14. The raised portions protrude laterally with respect to an imaginary plane P1 containing the second side surface 13 and thus the cutting edge 16 or 17 intersects the plane P1. The raised portions form a relatively small part of the total area of the second side surface 13, i.e. less than 30%. The lateral distance between the second side surface 12 and the raised portions 15A-15D determines the greatest width W of the cutting insert 11. A typical value of the width W is 3 to 4 mm. The cutting insert 11 has a negative basic shape since the end surfaces 14A-14D are substantially perpendicular to the side surfaces 12, 13. All corners portions are identical and all raised portions 15A-15D are identical in this embodiment, and therefore substantially only one of the corner portions is discussed hereinafter. The corner portion comprises the first cutting edge 16 and the second cutting edge 17. The first cutting edge 16 extends at an acute angle ß to a line perpendicular to the first side surface 12 or to a plane P2 containing the end surface 14B (as illustrated by Fig. 2D). The angle ß is chosen within the interval 3 to 9°, such as 4 to 5°. The first cutting edge 16 transits mathematically smooth into the second cutting edge 17. The second cutting edge 17 substantially follows a curved convex path from where it is connected to the first cutting edge 16. The path of the second cutting edge 17 is defined by a radius R1, the origin of which is situated on a line parallel to the first side surface 12. The second cutting edge is defined by the radius R1 in a circle segment about 90°. In this embodiment the second cutting edge 17 tangentially joins a third cutting edge 22 (as illustrated by Fig. 2E) that diverges from the plane P1 at a small angle and that extends to the greatest width W of the insert 11. Then the third cutting edge 22 connects to the second side surface 13 via two steps. The cutting edges 16, 17 connects to a rake face 18. The rake face 18 in this embodiment is positioned at least partly in a plane that slopes downwardly and inwardly from the first cutting edge 16 at an acute angle of about 20° to reduce cutting forces. The rake face 18 slopes from at least the forward part of the second cutting edge 17 in a similar manner. The rake face 18 forms a part of a concave recess 19 in the end surface. The recess 19 directs chips away from the generated surface. A clearance face 20 trails the cutting edges 16,17 when considering the working direction of the slot-milling tool. The clearance face 20 has a generally greater extension behind the second cutting edge 17 than behind the first cutting edge 16. In this embodiment the clearance face 20 extends a distance towards a trailing protrusion.

The cutting edges 16, 17 of each cutting insert 11 at one side of the slot milling tool are provided to cut away about one half of the material in the slot.

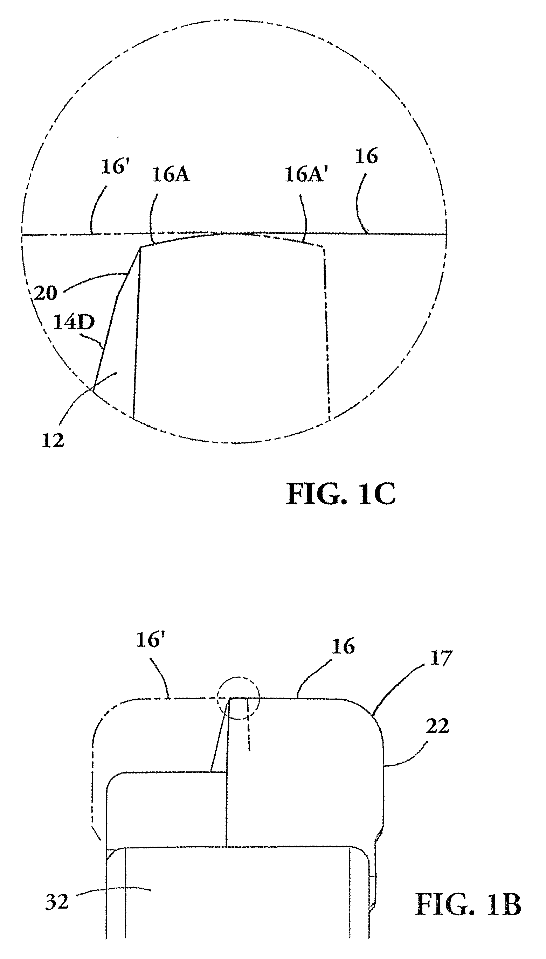

Referring especially to Figs. 1A, 1B and 1C each cutting insert 11 is positioned in a pocket 30 having three shoulders and a base surface. The cutting insert 11 rests with its first side surface 12 against the base surface. The base surface is angled within the interval 3 to 9°, such as 4 to 5°, such that its axial depth increases in direction radially inwardly. Thereby the cutting edge 16 and a trailing cutting edge 16' of another insert (as illustrated by a dashed line in Figs. 1B and 1C) will become parallel to the rotational axis of the slot-milling tool to achieve a smooth or straight slot bottom. As illustrated in Fig. 1C the cutting edge 16 connects to the lower surface 12 via a curved edge portion 16A, 16A' so as to provide smooth transfers between the edges 16 and 16' during slotting.

The shoulders of the pocket in this embodiment are substantially perpendicular to the base surface. Each shoulder is substantially perpendicular to the adjacent shoulder. Adjacent shoulders are separated by a recess fulfilling the objects of providing clearance for a pocket milling tool and subsequently providing clearance for the cutting edges 16, 17 and 22. The shoulder 31 that is closest to the active cutting corner 14 usually does not have a supporting function but rather is provided to deflect chips and debris to avoid damage to a passive cutting corner 14'.

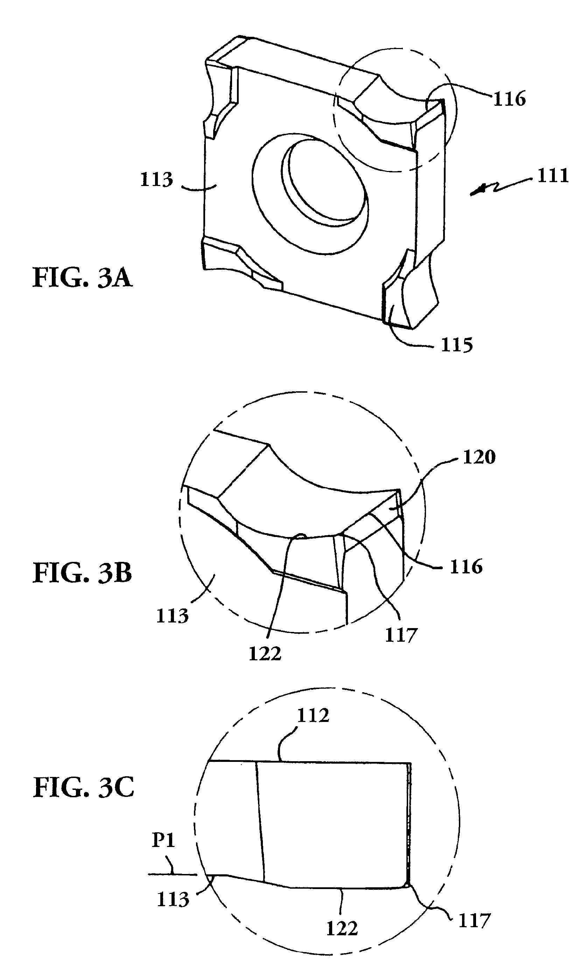

Figs. 3A-3C show an alternative embodiment of a milling insert 111 according to the invention. This embodiment differs from the one previously presented above substantially regarding the periphery of the raised portions 115 and regarding the extension of the clearance faces 120. The first cutting edge 116 here extends over the major part of the width of the cutting insert 111. The second cutting edge 117 is situated beyond the plane P1 with respect to an imaginary midline of the insert 111 and is defined by a small radius in comparison with the radius R1. The clearance face 120 has a generally greater extension behind the second cutting edge 117 than behind the first cutting edge 116 but each clearance face is spaced from the adjacent trailing raised portion 115. In this embodiment the second cutting edge 117 joins a slightly convex third cutting edge 122 (as illustrated by Fig. 3C) that diverges from the plane P1 and that extends to the greatest width W of the insert 111. Then the third cutting edge 122 connects to the second side surface 113 via a substantially straight transition.

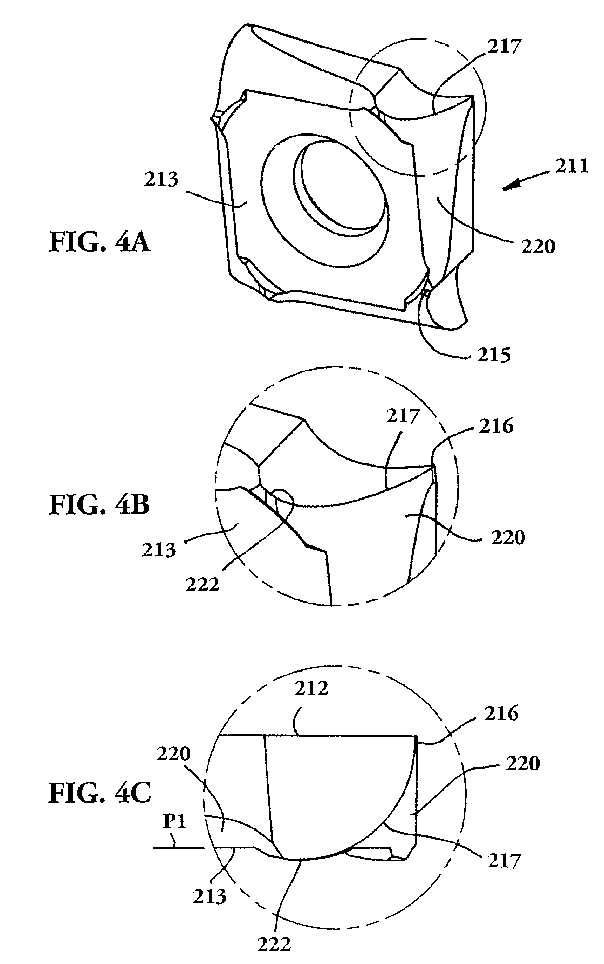

Figs. 4A-4C show an another alternative embodiment of a milling insert 211 according to the invention. This embodiment differs from the previously presented embodiments substantially regarding the periphery of the raised portions 215 and regarding the extension of the clearance faces 220. The first cutting edge 216 here extends over a minor part of the width of the cutting insert 211. The second cutting edge 217 extends over the major part of the width of the cutting insert 211 and intersects the plane P1. The second cutting edge 217 is defined by a larger radius in comparison with the radius R1 and greater than the radius disclosed in Fig. 2E. The clearance face 220 has a generally greater extension behind the second cutting edge 217 than behind the first cutting edge 216. The clearance face 220 reaches into the adjacent trailing raised portion 215. In this embodiment the second cutting edge 217 joins a third cutting edge 222 that diverges from the plane P1 and that extends to the greatest width W of the insert 211. Then the third cutting edge 222 connects to the second side surface 213 via a concave transition.

Milling of narrow slots with an insert according to the present invention has the advantages of providing a single sided cutting insert for a wide variety of widths of slots and having four cutting corners, providing an easy-cutting single sided cutting insert, providing a cutting insert, the basic geometry of which permits that varying corner shapes such as radius, chamfer, wiper edges or other shapes can be formed thereon, providing a milling tool that cuts a straight bottom surface in the slot, and providing a milling body and a cutting insert directing the chips away from the generated surface of the slot. It should be understood that the shown insert embodiments are to be mounted on one side of the mid plane of the milling tool and that a mirror-imaged milling insert is positioned at the other side of the mid plane.

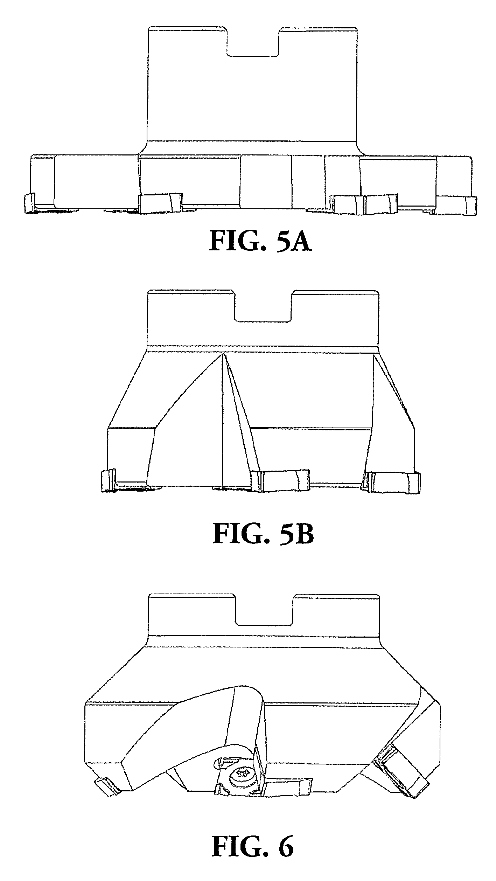

According to another aspect of the present invention each of the disclosed cutting insert according to the present invention can be used for face and/or shoulder milling. Figs. 5A and 5B show two alternative shoulder milling tools according to the present invention, each having a setting angle being about 90°.

According to yet another aspect of the present invention each of the disclosed cutting inserts according to the present invention can be used for face milling. Fig. 6 shows a milling tool according to the present invention having a setting angle being not 90°, e.g. 45°.

Milling surfaces by using an insert according to the present invention has the advantages of providing a single sided cutting insert for a wide variety of widths of slots and having four cutting corners, providing an easy-cutting single sided cutting insert, providing a cutting insert, the basic geometry of which permits that varying corner shapes such as radius, chamfer, wiper edges or other shapes can be formed thereon, and providing a cutting insert directing the chips away from the generated work piece surface.

The lower surface 12, 112 and 212, respectively, of the cutting insert according to the present invention is substantially identical in all shown embodiments. All shown insert embodiments can for example be ground from a single blank.

## Claims

1. A replaceable cutting insert to be on-edge mounted to a tool, said cutting insert (11 ;111 ;211) comprising a polygonal body of wear resistant material, said body including a first side surface (12;112;212) and a second side surface (13;113;213) opposing one another and therebetween a number of end surfaces (14A-14D), the intersection of two end surfaces forming a first cutting edge (16;116;216) at a corner portion (14), said cutting insert being provided with a central hole to receive a clamping device, said hole intersecting the first side surface and the second side surface, wherein the first side surface (12;112;212) is substantially planar, wherein the second side surface (13;113;213) connects to raised portions (15;115;215) at corner portions (14), wherein the first side surface (12;112;212) is greater than the second side surface (13;113;213),
and wherein the corner portion (14) comprises the first cutting edge (16;116;216) and a second cutting edge (17; 117; 217), **characterized in that** the cutting insert (11:111: 211 ) has four identical cutting corners (14), and **in that** a clearance face (20;120;220) trails the cutting edges (16,17), said clearance face (20; 120;220) having a generally greater extension behind the second cutting edge (17;117;217) than behind the first cutting edge (16;116;216) in a direction of extension parallel to the side surfaces towards a trailing raised portion (15; 115; 215).

2. The insert according to claim 1, wherein the raised portions (15;115;215) determines the greatest width (W) of the cutting insert (11;111;211) and in that the cutting edge (16,17;116,117;216,217) intersects a plane (P1) containing the second side surface (13;113;213).

3. The insert according to claim 1 or 2, wherein the first cutting edge (16;116;216) extends at an acute angle (β) to a line perpendicular to the first side surface (12;112;212) or to a plane (P2) containing an end surface (14C).

4. The insert according to claim 3, wherein the acute angle (β) is chosen within the interval 3 to 9°, such as 4 to 5°.

5. The insert according to claim 1, 2 or 3, wherein the first cutting edge (16; 116; 216) transits mathematically smooth into the second cutting edge (17;117;217).

6. The insert according to any one of the preceding claims, wherein the cutting edges (16, 17; 116, 117; 216, 217) connects to a rake face (18), said rake face (18) being positioned at least partly in a plane that slopes downwardly and inwardly from the first cutting edge (16; 116; 216) at an acute angle.

7. The insert according to any one of the preceding claims, wherein the rake face (18) forms a part of a concave recess (19) in the end surface (14A-14D).

8. A milling tool having a milling body, the periphery of said milling body being equipped with a number of cutting inserts (11; 111; 211), **characterized in that** the tool has pockets, each carrying an on-edge mounted cutting insert according to anyone of claims 1-7.

## Patentansprüche

1. Austauschbarer Schneideinsatz für die Montage an einer Kante eines Werkzeuges, wobei der Schneideinsatz (11;111;211) einen polygonalen Körper aus verschleißfestem Material aufweist und der Körper eine erste Seitenfläche (12;112;212) sowie eine zweite Seitenfläche (13; 113;213) umfasst, die entgegengesetzt zu einander liegen sowie dazwischen eine Anzahl von Stirnflächen (14 A-14 D), wobei der Schnitt zweier Stirnflächen eine erste Schneidkante (16;116;216) an einem Eckbereich (14) bildet, der Schneideinsatz mit einer zentraler Bohrung versehen ist, um eine Klemmvorrichtung aufzunehmen, die Bohrung die erste Seitenfläche und die zweite Seitenfläche schneidet, wobei die erste Seitenfläche (12;112;212) im Wesentlichen eben ist, während an die zweite Seitenfläche (13;113;213) ein erhabener Abschnitt (15;115;215) an Eckbereichen (14) anschließt, wobei die erste Seitenfläche (12;112;212) größer als die zweite Seitenfläche (13;113;213) ist, und wobei der Eckbereich zumindest die erste Schneidkante (16;116;216) und eine zweite Schneidekante (17;117;217) aufweist, **dadurch gekennzeichnet, dass** der Schneideinsatz (11;111;211) vier identische Schneidecken (14) hat und das eine Freifläche (20;120;220) hinter den Schneidkanten (16,17) angeordnet ist, wobei die Freifläche (20;120;220) in einer Erstreckungsrichtung parallel zu den Seitenflächen in Richtung eines nachlaufenden erhabenen Abschnittes (15; 115;215) eine im Allgemeinen größere Ausdehnung hinter der zweiten Schneidkante (17; 117;217) als hinter der ersten Schneidkante (16;116;216) hat.

2. Einsatz nach Anspruch 1, wobei die erhabenen Abschnitte (15;115;215) die größte Breite (W) des Schneideinsatzes (11;111;211) bestimmen und dass die Schneidkante (16,17;116,117;216,217) eine Ebene (P1) schneidet, welche die zweite Seitenfläche (13; 113;213) enthält.

3. Einsatz nach Anspruch 1 oder 2, wobei die erste Schneidkante (16;116;2016) sich unter einem spitzen Winkel zu einer Linie erstreckt, die senkrecht zu der ersten Seitenfläche (12; 112; 212) oder zu einer Ebene (P2) ist, welche eine Stirnfläche (14 C) enthält.

4. Einsatz nach Anspruch 3, wobei der spitze Winkel (β) in einem Intervall zwischen 3° und 9° gewählt wird, wie z. B. 4 bis 5°.

5. Einsatz nach Anspruch 1,2 oder 3, wobei die erste Schneidkante (16;116;216) im mathematischen Sinne glatt in die zweite Schneidkante (17;117;217) übergeht.

6. Einsatz nach einem der vorstehenden Ansprüche, wobei die Schneidkanten (16,17;116,117;216,217) an eine Spanfläche (18) anschließen, wobei die Spanfläche (18) zumindest teilweise in einer Ebene angeordnet ist, die von der ersten Schneidkante (16;116;216) unter einem spitzen Winkel nach unten und innen abfällt.

7. Einsatz nach einem der vorstehenden Ansprüche, wobei die Spanfläche (18) einen Teil einer konkaven Aussparung (19) in der Stirnfläche (14 A-14 D) bildet.

8. Werkzeug mit einem Fräserkörper, wobei der Umfang des Fräserkörpers mit einer Anzahl von Schneideinsätzen (11;111;211) ausgestattet ist, **dadurch gekennzeichnet, dass** das Werkzeug Taschen hat, die jeweils einen an der Kante montierten Schneideinsatz nach einem der Ansprüche 1-7 trägt.

## Revendications

1. Insert de coupe remplaçable devant être monté sur chant sur un outil, ledit insert de coupe (11 ; 111 ; 211) comprenant un corps polygonal d'un matériau résistant à l'usure, ledit corps incluant une première surface latérale (12 ; 112 ; 212) et une deuxième surface latérale (13 ; 113 ; 213) opposées l'une par rapport à l'autre et entre elles un certain nombre de surfaces d'extrémité (14A - 14D), l'intersection des deux surfaces d'extrémité formant une première arête de coupe (16 ; 116 ; 216) au niveau d'un coin (14), ledit insert de coupe étant doté d'un trou central pour recevoir un dispositif de serrage, ledit trou ayant une intersection avec la première surface latérale et la deuxième surface latérale, dans lequel la première surface latérale (12 ; 112 ; 212) est substantiellement plane, dans lequel la deuxième surface latérale (13 ; 113 ; 213) se connecte à des parties relevées (15 ; 115 ; 215) au niveau de parties de coin (14), dans lequel la première surface latérale (12 ; 112 ; 212) est plus grande que la deuxième surface latérale (13 ; 113 ; 213),
et dans lequel la partie de coin (14) comprend la première arête de coupe (16 ; 116 ; 216) et une deuxième arête de coupe (17 ; 117 ; 217), **caractérisé en ce que** l'insert de coupe (11 ; 111 ; 211) a quatre coins de coupe (14) identiques, et **en ce qu'**une face de dépouille (20 ; 120 ; 220) termine les arêtes de coupe (16, 17), ladite face de dépouille (20 ; 120 ; 220) ayant une extension généralement plus grande derrière la deuxième arête de coupe (17 ; 117 ; 217) par rapport à derrière la première arête de coupe (16 ; 116 ; 216) dans une direction d'extension parallèle aux surfaces latérales en direction d'une partie relevée arrière (15 ; 115; 215).

2. Insert selon la revendication 1, dans lequel les parties relevées (15 ; 115 ; 215) déterminent la plus grande largeur (W) de l'insert de coupe (11 ; 111 ; 211) et l'arête de coupe (16, 17 ; 116, 117 ; 216, 217) a une intersection avec un plan (P1) contenant la deuxième surface latérale (13 ; 113 ; 213).

3. Insert selon la revendication 1 ou 2, dans lequel la première arête de coupe (16 ; 116 ; 216) s'étend suivant un angle aigu (β) par rapport à une ligne perpendiculaire à la première surface latérale (12 ; 112 ; 212) ou à un plan (P2) contenant une surface d'extrémité (14C).

4. Insert selon la revendication 3, dans lequel l'angle aigu (β) est choisi dans l'intervalle de 3 à 9°, par exemple jusqu'à 5°.

5. Insert selon la revendication 1, 2 ou 3, dans lequel la première arête de coupe (16 ; 116 ; 216) a une transition mathématiquement douce vers la deuxième arête de coupe (17 ; 117 ; 217).

6. Insert selon l'une quelconque des revendications précédentes, dans lequel les arêtes de coupe (16, 17 ; 116, 117 ; 216, 217) se connectent à une face brute (18), ladite face brute (18) étant positionnée au moins partiellement dans un plan qui s'incline vers le bas et vers l'intérieur à partir de la première arête de coupe (16 ; 116 ; 216) suivant un angle aigu.

7. Insert selon l'une quelconque des revendications précédentes, dans lequel la surface brute (18) forme une partie d'un creux concave (19) dans la surface d'extrémité (14A - 14D).

8. Outil de fraisage ayant un corps de fraisage, la périphérie dudit corps de fraisage étant équipée d'un certain nombre d'inserts de coupe (11 ; 111 ; 211), **caractérisé en ce que** l'outil a des logements, portant chacun un insert de coupe monté sur chant selon l'une quelconque des revendications 1 à 7.
